# EUROPEAN PATENT APPLICATION

(11) **EP 1 251 707 A2**
(43) Date of publication of application: **23.10.2002**
(21) Application number: 02008772.2
(22) Date of filing: 18.04.2002
(51) Int. Cl.: H04Q 7/36

(54) **Vacant channel searching method**

(30) Priority: 20.04.2001 JP 2001122438
(71) Applicant: MATSUSHITA ELECTRIC INDUSTRIAL CO., LTD., Kadoma-shi, Osaka-fu (JP)
(72) Inventor: Yoshizawa, Kensuke, Osaka-shi, Osaka-fu (JP); Ikeda, Koji, Neyagawa-shi, Osaka-fu (JP); Kurobe, Akio, Tondabayashi-shi, Osaka-fu (JP)
(74) Representative: Gassner, Wolfgang, Dr.

(57) **Abstract**

There is provided a vacant channel searching method for use in a wireless communication system, capable of finding a optimum vacant channel which is under least influence of the disturbance by taking also into account the periodicity and burst properties of disturbance waves. The short-term fluctuation (short cycle T1) of disturbance waves is observed over each observation interval length T2. Through repetitive observations up to a repetition number N, the long-term fluctuation (long cycle T3) of the disturbance waves is observed. As a result, constant observations of disturbance generation are realized in such a manner as to account for the periodicity and burst properties of the disturbance waves. By determining a channel which is under least influence of the disturbance based on the results of such observations, it becomes possible to find an optimum vacant channel.

## Description

### BACKGROUND OF THE INVENTION

### Field of the Invention

The present invention relates to a vacant channel searching method for use in a wireless communication system utilizing a plurality of communication channels, and more particularly to a method of searching, among communication channels which are under the influence of periodic disturbance waves, for a vacant channel which is under least influence of the disturbance.

### Description of the Background Art

A wireless communication system is susceptible to various disturbances from other communication systems or electronic devices which happen to utilize the same frequency range. A wireless communication system having a plurality of communication channels typically operates in the following manner to avoid the influence of disturbances: if a current channel is suffering from a disturbance, a channel which is under the least influence of the disturbance is detected from among the other channels, and communications are continued by switching to the detected channel. Thus, the technique of vacant channel searching for detecting a channel which is under least influence of the disturbance plays an important role in communication quality, and the like.

Generally, a vacant channel search is made by observing disturbance waves which appear during one interval with respect to every channel, respectively calculating mean values of the disturbance waves, and comparing the mean values. Such a conventional vacant channel searching technique is disclosed in, for example, Japanese Patent Laid-Open Publication No. 57-17246.

On the other hand, in order to provide an improve accuracy over that of the aforementioned mean value-based vacant channel searching technique, a qualitative estimation of a bit-by-bit error rate may be made by using a well-known amplitude probability distribution (APD), and a vacant channel may be determined based on the result of the estimation. An APD represents a distribution of ratios of time during which the amplitude value of signal waves (disturbance waves) exceeds an arbitrary threshold value in a given observation period. Since the APD time ratio is in close relationship with the bit-by-bit error rate, it is possible to estimate the bit-by-bit error rate by examining this time ratio.

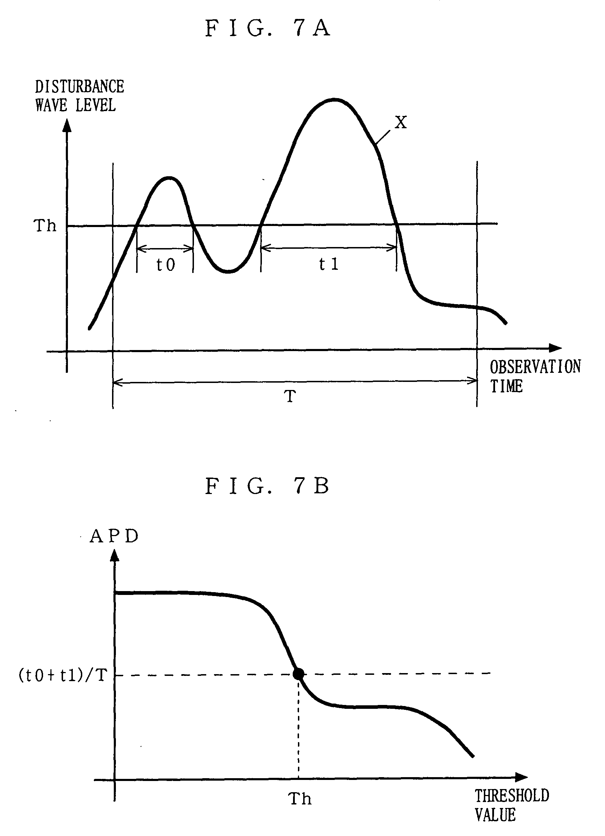

For example, with reference to FIG. 7A, when disturbance waves X observed in an observation period T are examined against a threshold value Th, it can be seen that the amplitude value of the disturbance waves X exceeds the threshold value Th during periods of time shown as t0 and t1. Therefore, the time ratio with which an amplitude value exceeding the threshold value Th occurs in the observation period T is calculated to be (t0+t1)/T. The time ratio, taken against varying threshold values Th, manifests itself as the APD characteristics shown in FIG. 7B. Based on a comparison of these time ratios, a vacant channel can be determined.

As influential generation sources of significant disturbance waves, microwave ovens utilizing magnetron oscillation and wireless LAN systems utilizing beacon generation are generally known. The disturbance waves which are emitted from such sources have a certain periodicity. In particular, the disturbance waves which are generated from a microwave oven have both a short periodicity and a long periodicity.

However, when the APDs observed in only one interval are used to counteract disturbance waves having periodicity, the APDs may be useful for estimating the bit-by-bit error rates within the observation period, but the estimation cannot take into account the periodicity and burst properties of the disturbances. As a result, the estimated bit-by-bit error rates may not support the frame error rates and throughput when frame-by-frame error correction is put in perspective.

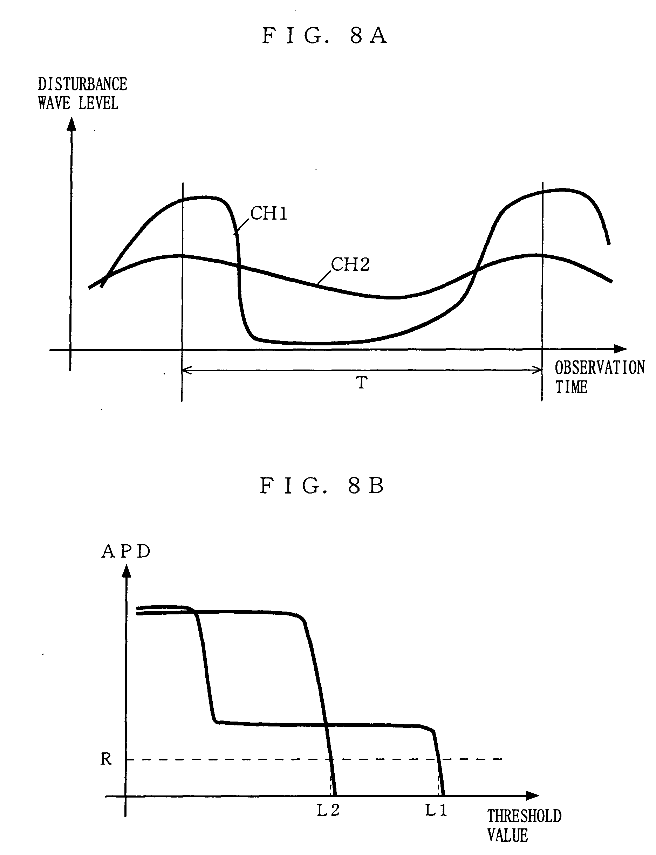

For example, if disturbance waves on channels CH1 and CH2 which vary with patterns shown in FIG. 8A are observed during an observation period T, APD characteristics as shown in FIG. 8B will be derived from the observations. If a vacant channel is determined based on a time ratio R by using these APD characteristics, a threshold value L1 for the channel CH1 will appear greater than a threshold value L2 for the channel CH2. As a result, the channel CH2 will be determined as a channel which is under little influence of the disturbance.

In actuality, however, a certain level of throughput can be expected from the channel CH1 because, on the channel CH1, the amount of time during which no disturbance occurs is rather long relative to the amount of time during which disturbances occur. On the other hand, the channel CH2, which is always under the influence of disturbances, produces a poorer throughput than the channel CH1 because more errors occur in the communication data than on the channel CH1. Thus, the conventional vacant channel searching method based on APD characteristics may produce incorrect channel searching results.

### SUMMARY OF THE INVENTION

Therefore, an object of the present invention is to provide a vacant channel searching method which is capable of finding an optimum vacant channel which is under least influence of disturbances by taking into account the periodicity and burst properties of disturbance waves.

The present invention has the following features to attain the object above.

The present invention is directed to a vacant channel searching method for use in a wireless communication system utilizing a plurality of communication channels where there is a periodic disturbance having two cycles T1 and T3 (where T1<T3), the method comprising: setting an observation interval length T2 which is equal to or greater than the cycle T1 and equal to or less than the cycle T3; on each of the plurality of communication channels, repeatedly making observations of disturbance waves associated with generation of the periodic disturbance, the observations being repeated N times (where N is an integer equal to or greater than two) within a period equal to the cycle T3, each observation spanning the observation interval length T2; and determining a vacant channel which is under least influence of the disturbance based on a state of disturbance generation on the plurality of communication channels as each known from results of the N observations.

Thus, according to the present invention, the short-term fluctuation (short cycle T1) of disturbance waves is observed over each observation interval length T2. Through repetitive observations up to a repetition number N, the long-term fluctuation (long cycle T3) of the disturbance waves is observed. As a result, constant observations of disturbance generation are realized in such a manner as to account for the periodicity and burst properties of the disturbance waves. By determining a channel which is under least influence of the disturbance based on the results of such observations, it becomes possible to find an optimum vacant channel.

Preferably, the observation interval length T2 is set so that the observation result for each unit interval is not affected by the influence of a disturbance waves component which fluctuates with the cycle T3.

By thus setting the observation interval length T2, the observation of the short-term fluctuation of the disturbance waves over the observation interval length T2 can be made with a high accuracy.

Preferably, if a generation source of the periodic disturbance is a microwave oven, the observation interval length T2 is set by regarding an oscillation frequency of a magnetron of the microwave oven as the cycle T1 and regarding a rotation cycle of a turntable of the microwave oven as the cycle T3. If a generation source of the periodic disturbance is a wireless LAN system, the observation interval length T2 is set by regarding a beacon generation cycle of the wireless LAN system as the cycle T1.

Furthermore, on each of the plurality of communication channels: an amplitude probability distribution (APD) is derived with respect to the disturbance waves observed during each of N instances of the observation interval length T2, wherein the amplitude probability distribution represents a distribution of ratios of time during which a level of the disturbance waves exceeds a predetermined threshold value, the rations being taken against the observation interval length T2; for each of N said amplitude probability distributions, a threshold value satisfying a time ratio which is determined based on the cycle T1 and a generation period of the disturbance waves is derived; and a representative value is determined from N said threshold values by using a predetermined scheme, and wherein a vacant channel which is under least influence of the disturbance is determined based on the representative values respectively determined for the plurality of communication channels. Thus, an optimum vacant channel which is under least influence of the disturbance can be easily determined.

Furthermore, on each of the plurality of communication channels: a mean value is derived with respect to the disturbance waves observed during each of N instances of the observation interval length T2; and a representative value is determined from N said mean values by using a predetermined scheme, and wherein a vacant channel which is under least influence of the disturbance is determined based on the representative values respectively determined for the plurality of communication channels. Thus, an optimum vacant channel which is under least influence of the disturbance can be easily determined.

In this case, one of the threshold or mean values indicating a median value may be determined as the representative value, and one of the plurality of communication channels having the smallest representative value may be determined as the vacant channel. Alternatively, a reference threshold or mean value may be set, and the number of said threshold or mean values which are equal to or less than the reference threshold or mean value may be determined as the representative value, and one of the plurality of communication channels having the largest representative value may be determined as the vacant channel. Alternatively, a reference threshold or mean value may be set, and the number of said threshold or mean values which are equal to or greater than the reference threshold or mean value may be determined as the representative value, and one of the plurality of communication channels having the smallest representative value may be determined as the vacant channel. Alternatively, a further mean value of those of the N threshold or mean values except for largest p threshold or mean values (where p<N/2) and/or smallest q threshold or mean values (where q<N/2) may be determined as the representative value, and one of the plurality of communication channels having the smallest representative value may be determined as the vacant channel.

These and other objects, features, aspects and advantages of the present invention will become more apparent from the following detailed description of the present invention when taken in conjunction with the accompanying drawings.

### BRIEF DESCRIPTION OF THE DRAWINGS

FIG. 1 is a diagram illustrating the relationship between various variables employed in the vacant channel searching method according to one embodiment of the present invention;
FIG. 2 is a flowchart illustrating a procedure of processes performed by the vacant channel searching method according to one embodiment of the present invention;
FIG. 3 is a diagram illustrating exemplary observation intervals for disturbance waves with respect to a given channel;
FIGS. 4 and 5 show examples of APD characteristics-based observation results obtained through disturbance wave observations during the observation intervals shown in FIG. 3;
FIG. 6 show examples of mean value-based observation results obtained through disturbance wave observations during the observation intervals shown in FIG. 3;
FIGS. 7A and 7B are graphs illustrating a notion of APD characteristics; and
FIGS. 8A and 8B are graphs illustrating problems associated with a conventional APD characteristics-based vacant channel searching method.

### DESCRIPTION OF THE PREFERRED EMBODIMENTS

The vacant channel searching method provided by the present invention is characterized by repeatedly making, in periods corresponding to the generation cycle of disturbance waves, a predetermined number of observations of respective channels; and determining an optimum vacant channel which is under least influence of the disturbance based on the observation results.

Hereinafter, the vacant channel searching method according to one embodiment of the present invention will be illustrated with respect to the case where the generation source of disturbance waves is a microwave oven and the case where the generation source is a wireless LAN system.

### (How disturbance wave observation periods are set)

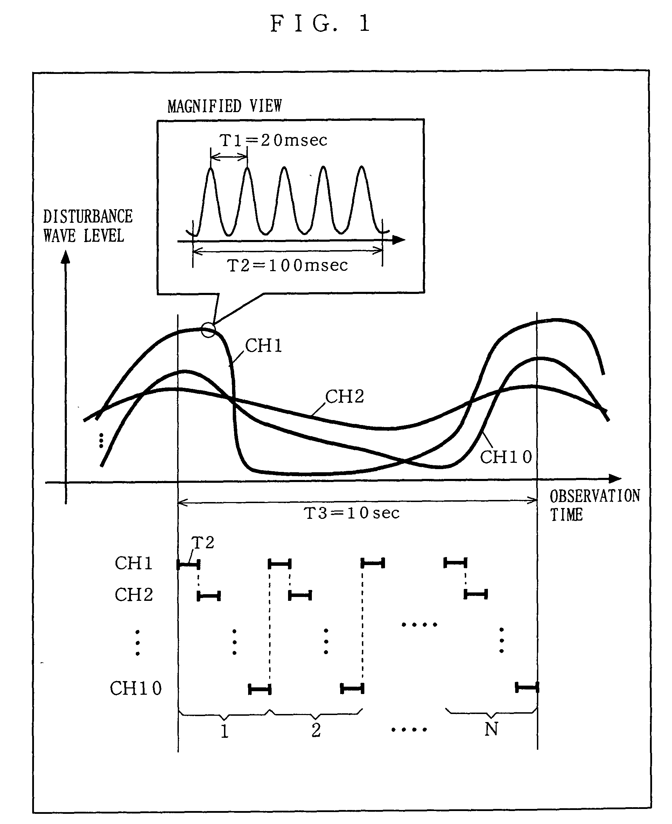

First, in the vacant channel searching method according to one embodiment of the present invention, an observation interval length T2 and a repetition number N are determined based on the cycle (hereinafter referred to as a "short cycle T1") of a component of disturbance waves whose level fluctuates over a relatively short time, the cycle (hereinafter referred to as a "long cycle T3") of a component whose level fluctuates over a relatively long time, and the number J of channels to be observed (where J is an integer equal to or greater than two). FIG. 1 is a diagram illustrating the relationship between various variables, with respect to exemplary disturbance waves emitted from a microwave oven.

### 1. In the case where the generation source of the disturbance waves is a microwave oven

The short cycle T1 of disturbance waves emitted from a microwave oven is governed by the oscillation frequency cycle of a magnetron of the microwave oven. The oscillation frequency is determined to be 1/(source frequency × step-up factor of the magnetron). Since the source frequency is 50 or 60 Hz and the step-up factor is 1 or 2 in Japan, the short cycles T1 of currently commercially available microwave ovens are 8.3, 10, 16.7, or 20 milliseconds. The observation interval length T2 is set so as to be equal to or greater than the short cycle T1 and be equal to or less than the long cycle T3(described later). Preferably, the observation interval length T2 is set at a length which is free from the influence of the long cycle (T3) fluctuation of the disturbance waves. If the short cycle T1 is known in advance, the observation interval length T2 may be set equal to T1 (i.e., T2=T1). On the other hand, if the short cycle T1 is unknown, the observation interval length T2 is set so as to be equal to or greater than 80 milliseconds, which is an approximation of the least common multiple among the four aforementioned short cycles T1. By thus setting the observation interval length T2, it is possible to support all of the four short cycles T1. In the example illustrated in FIG. 1, the observation interval length T2 is set to be 100 milliseconds.

The long cycle T3 of disturbance waves emitted from a microwave oven is governed by the rotation cycle of a turntable of the microwave oven. Note that the rotation cycle may differ from product to product. The repetition number N (where N is a natural number) defines a number of observations, each spanning the observation interval length T2, which are repeatedly made with respect to one channel. The repetition number N is determined so that a set of observations (each spanning the observation interval length T2) of the respective channels CH1 to CHJ are repeatedly made over a length of time equal to or longer than the long cycle T3. Specifically, the repetition number N is set to be a value which satisfies the relationship [repetition number N ≧ long cycle T3/(observation interval length T2×number J of channels)]. In the example illustrated in FIG. 1, the observation interval length T2 is 100 milliseconds, the number J of channels is ten, and the long cycle T3 is ten seconds. Therefore, the repetition number N is calculated to be 10 (= 10/(0.1×10)).

### 2. In the case where the generation source of the disturbance waves is a wireless LAN system

The short cycle T1 of disturbance waves emitted from a wireless LAN system is governed by the generation cycle of a beacon used in the wireless LAN system. Although the system specification may allow the generation cycle of the beacon to be as large as 60 seconds, most of commonly available products have a beacon generation cycle of 100 milliseconds. Therefore, it would be appropriate to assume the short cycle T1 to be 100 milliseconds. The observation interval length T2 is set to be equal to or greater than the short cycle T1. Although it is generally acceptable to set the observation interval length T2 to be equal to T1 (i.e., T2=T1), it is preferable to set the observation interval length T2 to be a value which satisfies the relationship [observation interval length T2>T1×n] (where n is an integer equal to or greater than two), so that a plurality of observations of the beacon generation can be made in order to provide an improved observation accuracy.

A disturbance wave emitted from a wireless LAN system does not have a fluctuation corresponding to the long cycle T3. Therefore, only the aforementioned short cycle T1 associated with the beacon generation affects the channels. The repetition number N defines a number of observations, each spanning the observation interval length T2, which are repeatedly made with respect to one channel. A unit length of time required for making a set of observations (each of which spans the observation interval length T2) of the respective channels CH1 to CHJ (i.e., observation interval length T2×number J of channels) is repeated up to the repetition number N.

### 3. In the case where both a microwave oven and a wireless LAN system are generation sources of the disturbance waves

In this case, as described in sections 1 and 2 above, the short cycles T1 of the disturbance waves are one of 8.3, 10, 16.7 or 20 milliseconds, and 100 milliseconds. It would be appropriate to set the observation interval length T2 to be 100 milliseconds in accordance with the generation cycle of the beacon. The long cycle T3 of the disturbance waves is the rotation cycle of the turntable. The repetition number N is set to be value which is equal to or greater than [long cycle T3/(observation interval length T2×number J of channels)].

### (observation of the disturbance waves)

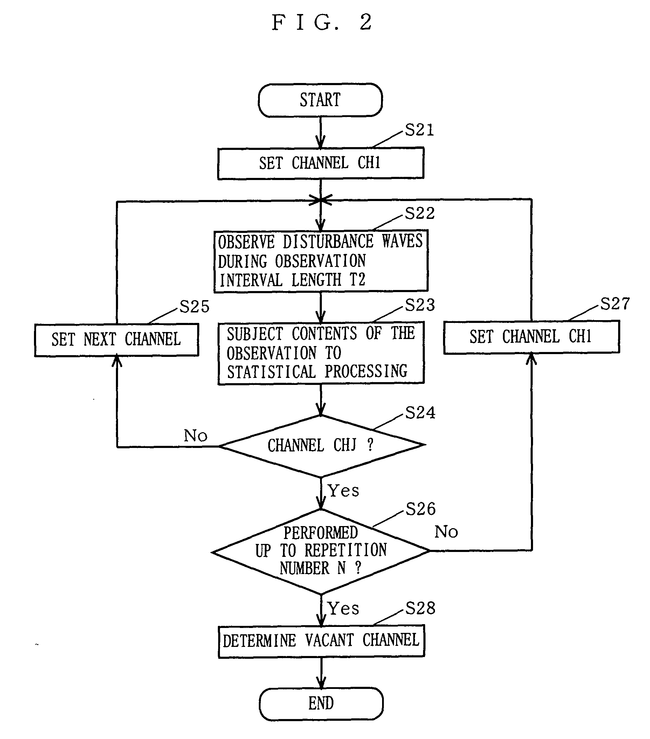

Next, the procedure of observing disturbance waves based on the variables which have been set in the aforementioned manner will be illustrated with reference to FIG. 2. FIG. 2 is a flowchart illustrating the procedure of processes performed by the vacant channel searching method according to one embodiment of the present invention.

First, channel CH1 is set as a channel to be observed (step S21). The disturbance waves which appear on channel CH1 are observed during the observation interval length T2 (step S22). The contents of the observation are subjected to statistical processing according to an APD scheme or a mean value scheme described below, and stored as observation results for channel CH1 (step S23).

Next, the channel to be observed is switched to the next channel, i.e., CH2 (step S25). The disturbance waves which appear on channel CH2 are observed during the observation interval length T2 as started from the end of observation of channel CH1 (step S22). The contents of the observation are subjected to statistical processing according to an APD scheme or a mean value scheme described below, and stored as observation results for channel CH2 (step S23).

Thereafter, the disturbance waves which appear on channels CH3 to CHJ are similarly observed, and observation results for all of channels CH1 to CHJ to be observed are derived and stored (step S24).

Once the first set of observations are completed for all of channels CH1 to CHJ to be observed, channel CH1 is again set as the channel to be observed (step S27), and the processes from step S22 to S25 are repeated. Such repetitions of the processes are made up to the repetition number N (step S26). Thus, N observation results are obtained for each of channels CH1 to CHJ.

Finally, an optimum vacant channel is determined based on the N observation results for each channel (step S28).

The above-described example illustrates a case where the disturbance wave observations for each of channels CH1 to CHJ are made from channel to channel, one channel at a time. However, a plurality of channels may be simultaneously observed in the case where the wireless communication system includes a plurality of unit structures for reception/processing on the respective channels. In that case, disturbance wave observations may be continuously made during the long cycle T3 so long as observation results are obtained while utilizing the observation interval length T2 as one unit.

### (Determination of a vacant channel)

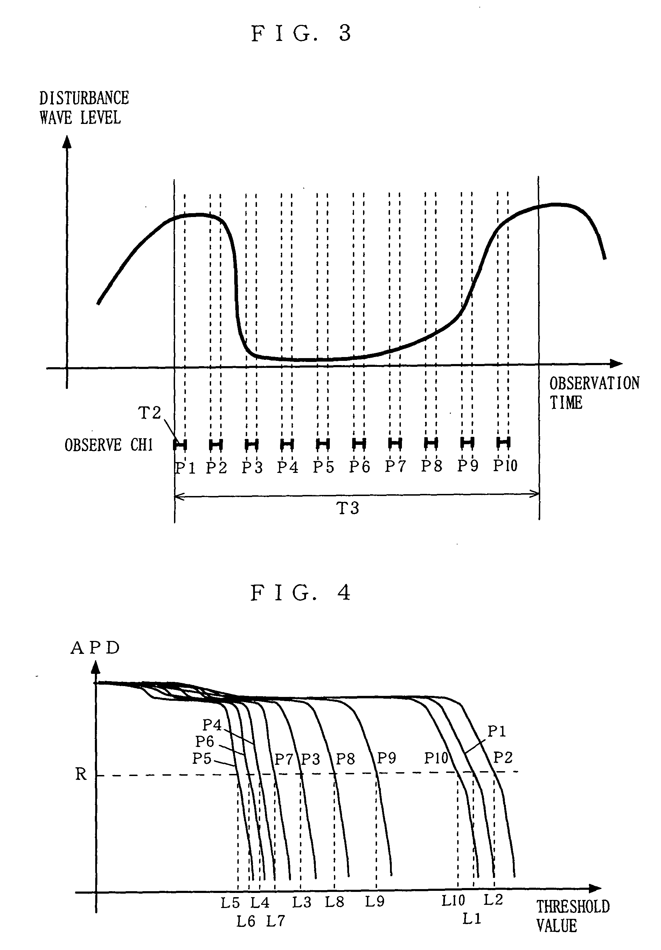

Next, the aforementioned statistical processing performed at step S23, the observation results produced thereby, and schemes for determining a vacant channel based on the observation result will be described with reference to FIGS. 3 to 5. The below description will be directed to the case where the repetition number N is ten.

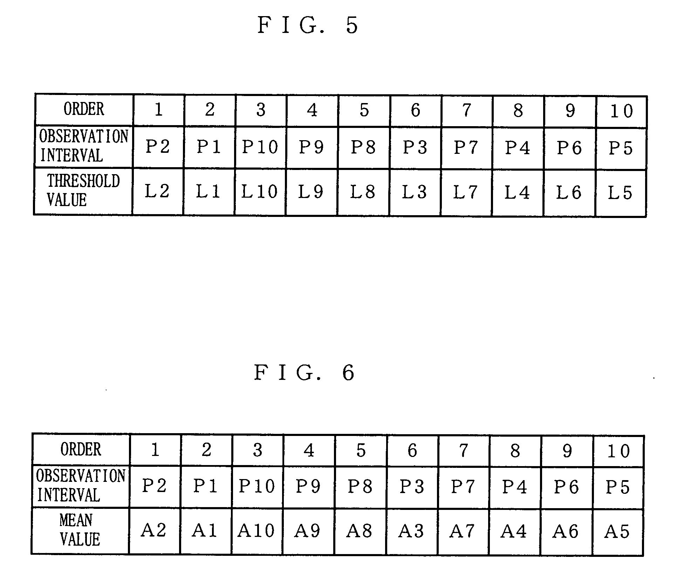

FIG. 3 is a diagram illustrating exemplary observation intervals P1 to P10 for disturbance waves with respect to a given channel. FIGS. 4 and 5 show examples of APD characteristics-based observation results obtained through disturbance wave observations during observation intervals P1 to P10 shown in FIG. 3. FIG. 6 show examples of mean value-based observation results obtained through disturbance wave observations during observation intervals P1 to P10 shown in FIG. 3.

### 1. In the case where a vacant channel is determined based on APD characteristics

Referring to FIG. 3, with respect to a given channel, disturbance waves are observed during ten observation intervals P1 to P10, each spanning the observation interval length T2. The amplitude values (disturbance levels) of the observed disturbance waves are subjected to statistical processing based on an APD scheme, whereby APD characteristics as shown in FIG. 4 are obtained. As described above, an APD represents a distribution of ratios of time during which the amplitude value of the disturbance waves exceeds a threshold value in a given observation interval. Therefore, the APD characteristic curve will appear more on the right-hand side of FIG. 4 as the amplitude value of the disturbance waves observed during a given observation interval becomes greater (see observation intervals P1, P2, and P10). Therefore, the APD characteristics will span a broad range in the case of disturbance waves having burst properties.

Next, for the APD characteristic curves associated with observation intervals P1 to P10, respectively, threshold values L1 to L10 which give a previously determined reference time ratio R are extracted. The reference time ratio R must be selected based on the short cycle T1 and the generation period of the disturbance waves. In the case where the generation source of the disturbance waves is a microwave oven, the generation period of the disturbance waves associated with magnetron oscillation is longer than the short cycle T1; therefore, the reference time ratio R may be set so that 0.0001<R< 0.1. On the other hand, in the case where the generation source of the disturbance waves is a wireless LAN system, the generation period of the disturbance waves associated with beacon generation is much shorter than the short cycle T1; therefore, the reference time ratio R needs to be set to be equal to or less than the beacon generation time, i.e., (1 beacon frame transmission time)/beacon generation interval (short cycle T1). For example, in the case where the beacon generation interval is 60 milliseconds, and the beacon generation time is 200 microseconds, the reference time ratio R must be set to be equal to or less than 1/300 in order to detect the beacon.

Finally, the extracted threshold values L1 to L10 are sorted and managed in a descending order as shown in FIG. 5.

Then, using the threshold values L1 to L10 extracted for the respective channels, a vacant channel is determined by one of the four following schemes.

Under a first scheme, a median of the threshold values L1 to L10 is derived for each channel as a representative value for that channel. Based on a comparison of the representative values for all of the channels, a channel having the smallest representative value is determined as a vacant channel. In the case of the exemplary threshold values L1 to L10 shown in FIG. 5, where there is an even number of threshold values, (L3+L8)/2 is utilized as the representative value.

Under a second scheme, all of the threshold values L1 to L10 except for the maximum threshold value and the minimum threshold value, a median or mean value is derived for each channel as a representative value for that channel. Based on a comparison of the representative values for all of the channels, a channel having the smallest representative value is determined as a vacant channel. The exclusion of the maximum and minimum values ensures that any value which is observed as a result of some accidental event will not be used for the vacant channel determination. In the case of the exemplary threshold values L1 to L10 shown in FIG. 5, L2 and L5 are excluded when deriving a representative value based on a median or mean value. The threshold values to be excluded are not limited to maximum and minimum values, but may be any number of arbitrarily-selected threshold values having comparatively greater (or smaller) values.

Under a third scheme, a reference threshold value K is set, and the number of threshold values among the threshold values L1 to L10 which are equal to or less than the reference threshold value K is derived for each channel as a representative value for that channel. Based on a comparison of the representative values for all of the channels, a channel having the largest representative value is determined as a vacant channel. The reference threshold value K may be set at the maximum disturbance level which allows a desired throughput to be achieved. In the case of the exemplary threshold values L1 to L10 shown in FIG. 5, if K is set such that L9<K<L10, then the representative value is "seven". Alternatively, the number of threshold values among the threshold values L1 to L10 which are equal to or greater than the reference threshold value K may be derived as a representative value for each channel, and a channel having the smallest representative value may be determined as a vacant channel.

Under a fourth scheme, a threshold value which is in any arbitrary place in the descending order of the threshold values L1 to L10 is derived for each channel as a representative value for that channel. Based on a comparison of the representative values for all of the channels, a channel having the smallest representative value is determined as a vacant channel. For example, in the case where a threshold value which is in the third place among the threshold values L1 to L10 is used as a representative value, the threshold value L10 is regarded as the representative value in the exemplary case shown in FIG. 5.

### 2. In the case where a vacant channel is determined based on mean values

Referring to FIG. 3, with respect to a given channel, disturbance waves are observed during ten observation intervals P1 to P10, each spanning the observation interval length T2. From the observed amplitude values (disturbance levels) of the disturbance waves, mean values A1 to A10 are respectively obtained. The mean values A1 to A10 are sorted and managed in a descending order as shown in FIG. 6.

Then, using the mean values A1 to A10 extracted for the respective channels, a vacant channel is determined by one of the four following schemes.

Under a first scheme, a median of the mean values A1 to A10 is derived for each channel as a representative value for that channel. Based on a comparison of the representative values for all of the channels, a channel having the smallest representative value is determined as a vacant channel. In the case of the exemplary mean values A1 to A10 shown in FIG. 6, where there is an even number of mean values, (A3+A8)/2 is utilized as the representative value.

Under a second scheme, all of the mean values A1 to A10 except for the maximum mean value and the minimum mean value, a median or new mean value is derived for each channel as a representative value for that channel. Based on a comparison of the representative values for all of the channels, a channel having the smallest representative value is determined as a vacant channel. The exclusion of the maximum and minimum values ensures that any value which is observed as a result of some accidental event will not be used for the vacant channel determination. In the case of the exemplary mean values A1 to A10 shown in FIG. 6, A2 and A5 are excluded when deriving a representative value based on a median or new mean value. The mean values to be excluded are not limited to maximum and minimum values, but may be any number of arbitrarily-selected mean values having comparatively greater (or smaller) values.

Under a third scheme, a reference mean value M is set, and the number of mean values among the mean values A1 to A10 which are equal to or less than the reference mean value M is derived for each channel as a representative value for that channel. Based on a comparison of the representative values for all of the channels, a channel having the largest representative value is determined as a vacant channel. The reference mean value M may be set at the maximum disturbance level which allows a desired throughput to be achieved. In the case of the exemplary mean values A1 to A10 shown in FIG. 6, if M is set such that A9<M<A10, then the representative value is "seven". Alternatively, the number of mean values among the mean values A1 to A10 which are equal to or greater than the reference mean value M may be derived as a representative value for each channel, and a channel having the smallest representative value may be determined as a vacant channel.

Under a fourth scheme, a mean value which is in any arbitrary place in the descending order of the mean values A1 to A10 is derived for each channel as a representative value for that channel. Based on a comparison of the representative values for all of the channels, a channel having the smallest representative value is determined as a vacant channel. For example, in the case where a mean value which is in the third place among the mean values A1 to A10 is used as a representative value, the mean value A10 is regarded as the representative value in the exemplary case shown in FIG. 6.

As described above, in accordance with a vacant channel searching method according to one embodiment of the present invention, the short-term fluctuation (short cycle T1) of disturbance waves is observed over each observation interval length T2. Through repetitive observations up to a repetition number N, the long-term fluctuation (long cycle T3) of the disturbance waves is observed. As a result, constant observations of disturbance generation are realized in such a manner as to account for the periodicity and burst properties of the disturbance waves. By determining a channel which is under least influence of the disturbance based on the results of such observations, it becomes possible to find an optimum vacant channel.

While the invention has been described in detail, the foregoing description is in all aspects illustrative and not restrictive. It is understood that numerous other modifications and variations can be devised without departing from the scope of the invention.

## Claims

1. A vacant channel searching method for use in a wireless communication system utilizing a plurality of communication channels where there is a periodic disturbance having two cycles T1 and T3 (where T1<T3), the method comprising:
setting an observation interval length T2 which is equal to or greater than the cycle T1 and equal to or less than the cycle T3;
on each of the plurality of communication channels, repeatedly making observations of disturbance waves associated with generation of the periodic disturbance, the observations being repeated N times (where N is an integer equal to or greater than two) within a period equal to the cycle T3, each observation spanning the observation interval length T2; and
determining a vacant channel which is under least influence of the disturbance based on a state of disturbance generation on the plurality of communication channels as each known from results of the N observations.

2. The vacant channel searching method according to claim 1,
wherein the observation interval length T2 is set so that the observation result for each unit interval is not affected by the influence of a disturbance waves component which fluctuates with the cycle T3.

3. The vacant channel searching method according to claim 1,
wherein, if a generation source of the periodic disturbance is a microwave oven, the observation interval length T2 is set by regarding an oscillation frequency of a magnetron of the microwave oven as the cycle T1 and regarding a rotation cycle of a turntable of the microwave oven as the cycle T3.

4. The vacant channel searching method according to **claim 2,**
wherein, if a generation source of the periodic disturbance is a microwave oven, the observation interval length T2 is set by regarding an oscillation frequency of a magnetron of the microwave oven as the cycle T1 and regarding a rotation cycle of a turntable of the microwave oven as the cycle T3.

5. The vacant channel searching method according to claim 1,
wherein, if a generation source of the periodic disturbance is a wireless LAN system, the observation interval length T2 is set by regarding a beacon generation cycle of the wireless LAN system as the cycle T1.

6. The vacant channel searching method according to claim 2,
wherein, if a generation source of the periodic disturbance is a wireless LAN system, the observation interval length T2 is set by regarding a beacon generation cycle of the wireless LAN system as the cycle T1.

7. The vacant channel searching method according to claim 1,
wherein, on each of the plurality of communication channels:
an amplitude probability distribution (APD) is derived with respect to the disturbance waves observed during each of N instances of the observation interval length T2, wherein the amplitude probability distribution represents a distribution of ratios of time during which a level of the disturbance waves exceeds a predetermined threshold value, the rations being taken against the observation interval length T2;
for each of N said amplitude probability distributions, a threshold value satisfying a time ratio which is determined based on the cycle T1 and a generation period of the disturbance waves is derived; and
a representative value is determined from N said threshold values by using a predetermined scheme, and
wherein a vacant channel which is under least influence of the disturbance is determined based on the representative values respectively determined for the plurality of communication channels.

8. The vacant channel searching method according to claim 7,
wherein one of the threshold values indicating a median value is determined as the representative value, and one of the plurality of communication channels having the smallest representative value is determined as the vacant channel.

9. The vacant channel searching method according to claim 7, further comprising setting a reference threshold value,
wherein the number of said threshold values which are equal to or less than the reference threshold value is determined as the representative value, and one of the plurality of communication channels having the largest representative value is determined as the vacant channel.

10. The vacant channel searching method according to claim 7, further comprising setting a reference threshold value,
wherein the number of said threshold values which are equal to or greater than the reference threshold value is determined as the representative value, and one of the plurality of communication channels having the smallest representative value is determined as the vacant channel.

11. The vacant channel searching method according to claim 7,
wherein a mean value of those of the N threshold values except for largest p threshold values (where p<N/2) and smallest q threshold values (where q<N/2) is determined as the representative value, and one of the plurality of communication channels having the smallest representative value is determined as the vacant channel.

12. The vacant channel searching method according to claim 7,
wherein a mean value of those of the N threshold values except for largest p threshold values (where p<N/2) or smallest q threshold values (where q<N/2) is determined as the representative value, and one of the plurality of communication channels having the smallest representative value is determined as the vacant channel.

13. The vacant channel searching method according to claim 1,
wherein, on each of the plurality of communication channels:
a mean value is derived with respect to the disturbance waves observed during each of N instances of the observation interval length T2; and
a representative value is determined from N said mean values by using a predetermined scheme, and
wherein a vacant channel which is under least influence of the disturbance is determined based on the representative values respectively determined for the plurality of communication channels.

14. The vacant channel searching method according to claim 13,
wherein one of the mean values indicating a median value is determined as the representative value, and one of the plurality of communication channels having the smallest representative value is determined as the vacant channel.

15. The vacant channel searching method according to claim 13, further comprising setting a reference mean value,
wherein the number of said mean values which are equal to or less than the reference mean value is determined as the representative value, and one of the plurality of communication channels having the largest representative value is determined as the vacant channel.

16. The vacant channel searching method according to claim 13, further comprising setting a reference mean value,
wherein the number of said mean values which are equal to or greater than the reference mean value is determined as the representative value, and one of the plurality of communication channels having the smallest representative value is determined as the vacant channel.

17. The vacant channel searching method according to claim 13,
wherein a further mean value of those of the N mean values except for largest p mean values (where p<N/2) and smallest q mean values (where q<N/2) is determined as the representative value, and one of the plurality of communication channels having the smallest representative value is determined as the vacant channel.

18. The vacant channel searching method according to claim 13,
wherein a further mean value of those of the N mean values except for largest p mean values (where p<N/2) or smallest q mean values (where q<N/2) is determined as the representative value, and one of the plurality of communication channels having the smallest representative value is determined as the vacant channel.
